Europäisches Patentamt

European Patent Office

Office européen des brevets

(11) Veröffentlichungsnummer: **0 216 942**
**B1**

(12) EUROPÄISCHE PATENTSCHRIFT

(45) Veröffentlichungstag der Patentschrift:
09.05.90

(51) Int. Cl.⁵: **B60R 1/06**

(21) Anmeldenummer: 85109550.5

(22) Anmeldetag: 30.07.85

(54) Fahrzeug-Aussenspiegel mit mechanisch verstellbarem Spiegel.

(43) Veröffentlichungstag der Anmeldung:
08.04.87 Patentblatt 87/15

(73) Patentinhaber: HOHE KG, Hauptstrasse 36,
D-6981 Collenberg(DE)

(45) Bekanntmachung des Hinweises auf die Patenterteilung:
09.05.90 Patentblatt 90/19

(72) Erfinder: Gillet, Jean-Luc, Bahnhofstrasse 2,
D-6981 Collenberg(DE)

(84) Benannte Vertragsstaaten:
AT BE CH DE FR GB IT LI LU NL SE

(74) Vertreter: Zinngrebe, Horst, Dr.rer.nat.,
Saalbaustrasse 11, D-6100 Darmstadt(DE)

(56) Entgegenhaltungen:
EP-A- 0 019 501
WO-A-83/01986
DE-U- 7 529 248
FR-A- 2 391 629
US-A- 3 251 238
US-A- 3 390 588

## Beschreibung

Die Erfindung betrifft einen Fahrzeug-Außenspiegel mit einem an einem Fuß schwenkbar befestigten Gehäuse, in welchem ein einen Spiegel tragender Träger über ein mit dem Träger und mit dem Boden des Gehäuses verbundenes, eine Wippe aufweisendes Kreuzgelenk befestigt ist, sowie mit einem in zwei zueinander senkrechten Richtungen verstellbaren Handgriff, an welchen ein längsverschiebliches, sich durch den Fuß erstreckendes und am Träger eingehängtes Zugorgan gekoppelt ist.

Der aus dem Dokument DE-U 7 806 907 gemäß dem Oberbegriff des Anspruchs 1 bekannte Außenspiegel für ein Kraftfahrzeug enthält einen um zwei zueinander senkrechte und in der Spiegelebene liegende Achsen verstellbaren Spiegel. Dazu ist eine Wippe vorgesehen, von der zwei gegenüberliegende Zapfen je einem mit dem Boden des Spiegelgehäuses verbundenen Bock und zwei dazu quer liegende Zapfen an einem mit dem Spiegel verbundenen Träger gelagert sind. Um eine allseitige Verstellbarkeit des Spiegels um die genannten Achsen zu gewährleisten, sind am Träger die Enden dreier Bowdenzüge eingehängt, die sich durch den Fuß, an welchem das Spiegelgehäuse schwenkbar gelagert ist, erstrecken. Die handgriffseitigen Enden der ummantelten Bowdenzüge sind mit einer Übersetzungsvorrichtung verbunden, welche die von einer Bedienungsperson veranlaßten Bewegungen des Handgriffs in Druck- und/oder Zugbewegungen der Bowdenzüge überträgt.

Diese vom Inneren eines Fahrzeugs aus betätigbare Verstellvorrichtung für den Spiegel eines Fahrzeug-Außenspiegels ist relativ aufwendig und schwergängig, weil die Bowdenzüge durch den Fuß und das Schwenkgelenk zwischen Gehäuse und Fuß nicht hinreichend krümmungsarm geführt werden können.

Aus dem Dokument US-A 3 251 238 ist ein Fahrzeugaußenspiegel bekannt, dessen auf einer Gelenkkugel im Spiegelgehäuse gelagerter Spiegel mittels Verstellbewegungen eines im Fahrzeuginneren befestigten Handhebels um zwei zueinander senkrechte Achsen verstellt werden kann, wobei die Verstellbewegungen durch die Seele eines Bowden-Zuges auf ein mit dem Spiegel gekoppeltes Zahnsegment übertragen werden.

Mit der Erfindung soll daher ein Außenspiegel geschaffen werden, dessen Spiegel sich vom Inneren des Fahrzeugs aus mechanisch leichtgängiger und mit möglichst wenig konstruktivem Aufwand verstellen läßt.

Dazu ist erfindungsgemäß bei dem eingangs genannten Außenspiegel vorgesehen, daß das Zugorgan eine biegsame Welle ist, deren trägerseitiges Ende an einem quer zum Spiegel vom Träger abstehenden Arm eingehängt ist und ein mit der Welle drehbares Ritzel trägt, das msit einem an der Wippe ausgebildeten Zahnsegment kämmt, und daß das handgriffseitige Ende der Welle mit einem weiteren Ritzel drehfest gekoppelt ist, welches mit einer verschiebbaren, mit dem Handgriff gekoppelten Zahnstange längsverschiebbar kämmt. Die biegsame Welle läßt sich ohne große Probleme leicht durch das Schwenkgelenk des Gehäuses am Fuß hindurchführen und ermöglicht eine leichtgängige Verstellung des Spiegels, der sogar zur Not unmittelbar von Hand am Glas verstellt werden kann. Außerdem ist die Montage gegenüber dem bekannten Außenspiegel wesentlich vereinfacht.

In zweckmäßiger Weiterbildung der Erfindung ist die Welle von einem festen, biegsamen und am Gehäuse festgelegten Mantel umgeben, der sich durch den Fuß erstreckt. Dadurch ist die Welle bei der Übertragung der translatorischen und rotatorischen Bewegung zwischen ihren Enden definiert geführt. Das Verlegen der Welle durch den Fuß gestaltet sich in Weiterbildung der Erfindung dann besonders einfach, wenn das Gehäuse am Fuß um einen Lagerbolzen schwenkbar befestigt ist, an welchem die Welle durch Öffnungen im Fuß und Gehäuse quer vorbeigeführt ist. Das Fußlager kann dazu einen zylindrischen Käfig aufweisen, durch den sich der Lagerbolzen axial erstreckt, wobei in der Käfigseitenwand zwei gegenüberliegende Öffnungen für die Welle vorgesehen sind, von denen zweckmäßig die gehäuseseitige Öffnung zu einem Umfangsschlitz erweitert ist. Alternative kann auch die im Gehäuse vorgesehene Öffnung für die Welle zu einem Querschlitz erweitert sein.

Zur Übertragung der Bewegungen des Handgriffs auf entsprechende Bewegungen der Welle ist in Weiterbildung der Erfindung vorgesehen, daß der Handgriff an einem mit der Zahnstange gekoppelten Schwenkhebel befestigt ist. Dadurch wird die Bewegung des Handgriffs um eine Achse in eine Drehung der Welle übersetzt. Ferner kann der Handgriff sich durch eine quer zur Zahnstange verschiebbare und mit dem Ritzel gekoppelte Platte erstrecken, so daß die seitliche Bewegung des Handgriffs in eine entsprechende translatorische Bewegung des Ritzels übertragen wird.

Die spiegelseitige Umsetzung der Bewegungen der Welle in solche des Spiegels erfolgt in zweckmäßiger Weiterbildung der Erfindung dadurch, daß das Zahnsegment in mit dem Gehäuse verbundenen Böcken gelagert und mit einer in Nasen des Trägers gelagerten Welle quer durchsetzt ist. Der Arm kann dann das Zahnsegment beidseitig zwischen den Böcken umfassen, wobei das Ritzel im Arm unterhalb des Zahnsegments gelagert ist.

Wenn in bevorzugter Weiterbildung der Erfindung die Zahnstange das weitere Ritzel unterfaßt und der Arm um die Längsachse des Spiegels, die bei an einem Fahrzeug anmontiertem Spiegel im wesentlichen horizontal verläuft, schwenkbar gelagert ist, ergibt sich eine bedienungsfreundliche Synchronisierung zwischen der Auf/Abbewegung des Handgriffs und einer Auf/Abbewegung des Spiegels und entsprechend bei einer Links/-Rechtsbewegung des Handgriffs.

Die Erfindung wird nachstehend anhand des in der beigefügten Zeichnung dargestellten Ausführungsbeispiels im einzelnen beschrieben. Es zeigen:

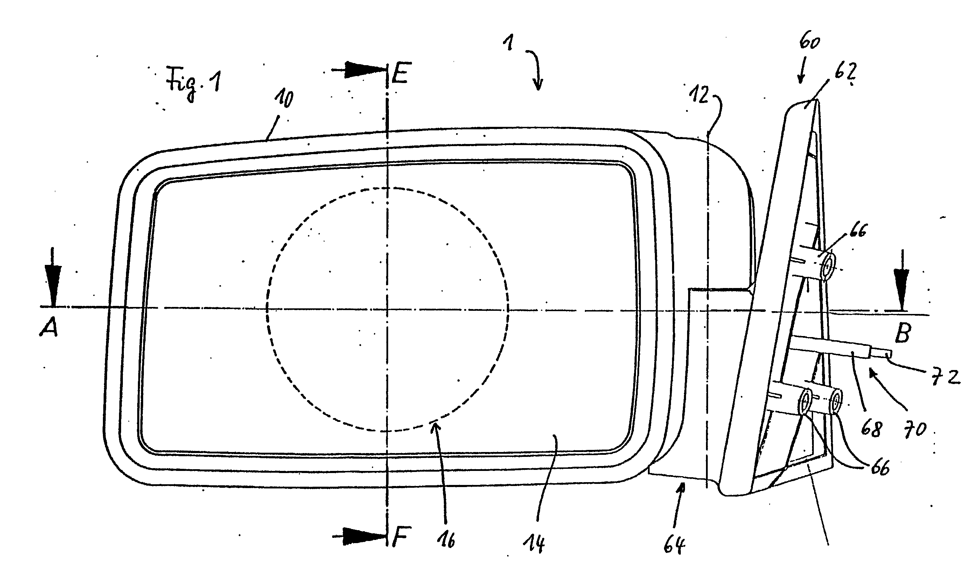

Fig. 1 eine Ansicht eines Fahrzeug-Außenspiegels von hinten;

Fig. 2 die Ansicht eines Schnittes durch den Außenspiegel nach Fig. 1 längs der Linie A-B;

Fig. 3 eine Ansicht eines Schnittes durch den Außenspiegel nach Fig. 1 längs der Linie E-F;

Fig. 4 die Ansicht eines Schnittes durch den Außenspiegel nach Fig. 2 längs der Linie C-D;

Fig. 5 eine schematische Ansicht eines Schnittes quer zum handgriffseitigen Ende der biegsamen Welle durch einen Stellkasten für den Handgriff;

Fig. 6 eine schematische Draufsicht auf die Vorrichtung nach Fig. 5; und

Fig. 7 eine schematische Frontansicht der Vorrichtung nach Fig. 5 nach Abnahme des Handgriffs.

Der Außenspiegel 1 besteht aus einem Gehäuse 10 und einem Fuß 60, an welchem das Gehäuse um eine Achse 12 schwenkbar befestigt ist. In dem Gehäuse 10 ist ein Spiegel 14 um zwei zueinander senkrechte Achsen verstellbar gelagert. Der Spiegel 14 ist dazu rückseitig auf einem gestrichelt angedeuteten Spiegelglas-Träger 16 befestigt.

Der Fuß 60 weist eine Montageplatte 62 und einen Lagerabschnitt 64 auf, der aus der Montageplatte 62 seitlich vorsteht. Die Montageplatte 62 besitzt an ihrer dem Lagerabschnitt 64 gegenüberliegenden Seite Montagezapfen 66, die eine Befestigung des Spiegels 1 am vorderen Dreieck der linken Fahrertür eines Kraftfahrzeugs ermöglichen. Aus der Montageplatte 62 erstreckt sich eine von einem festen biegsamen Mantel 68 umhüllte Welle 70. Das aus dem Mantel 68 vorstehende handgriffseitige Ende 72 ist dazu bestimmt, an einen in der Fig. 5 bis 7 dargestellten Stellkasten 100 angeschlossen zu werden, der im Inneren des nicht dargestellten Fahrzeugs befestigt ist.

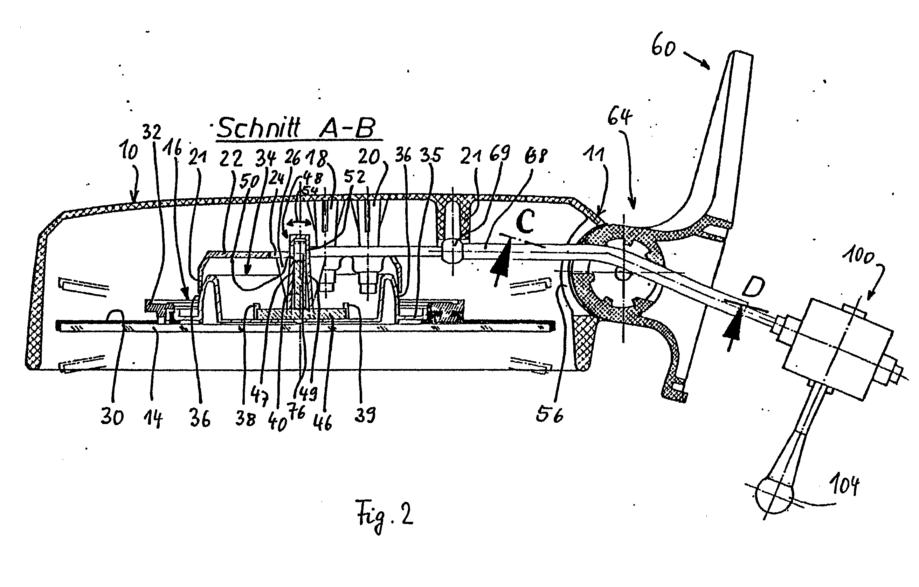

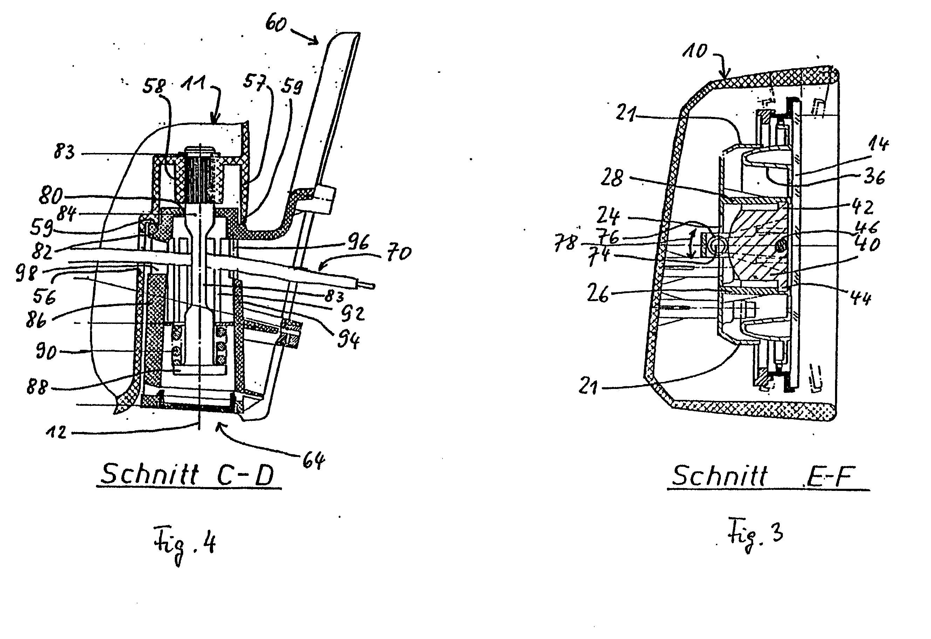

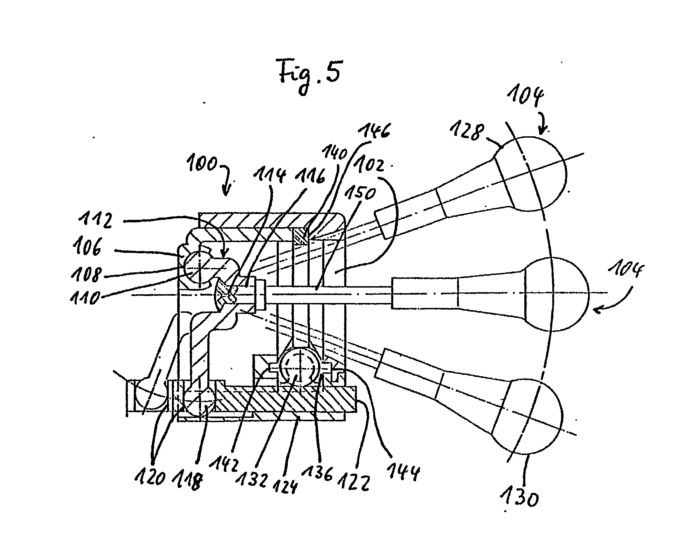

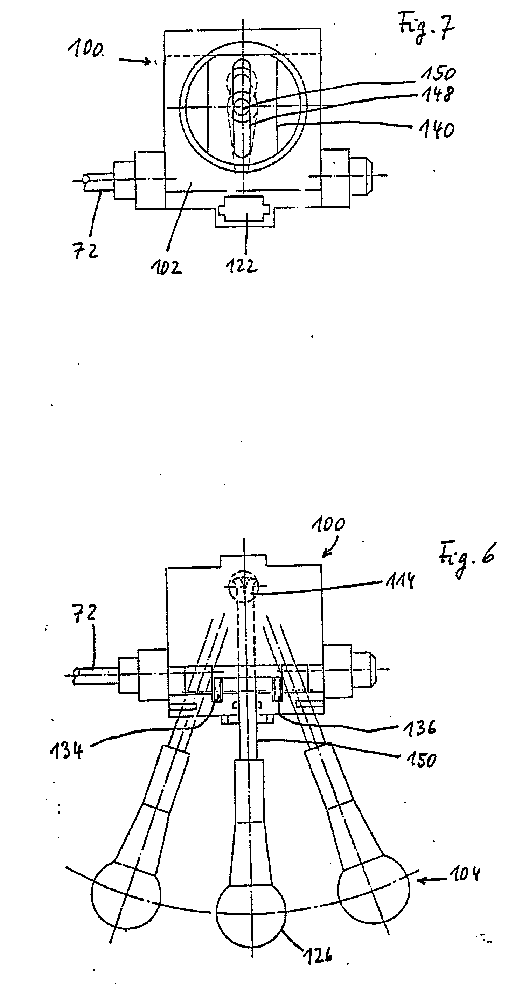

Gemäß Fig. 2 stehen aus dem Boden des Spiegelgehäuses 10 nach innen zwei Pfosten 18, 20 vor, auf denen eine schalenförmige Trägerplatte 22 fest verankert ist. Die Trägerplatte 22 besitzt einen mittigen Durchbruch 24 sowie zwei erhabene Böcke 26, 28, die einander gegenüber stehend beiderseits des Durchbruchs 24 sich aus dem Boden der Trägerplatte 22 höher als der umlaufende Bord 21 der Trägerplatte 22 erheben. Am oberen Ende weist jeder der beiden Böcke 26, 28 zwei fluchtende, nicht dargestellte Lagerbohrungen auf.

Der Spiegelglas-Träger 16 weist im einzelnen eine auf die Rückseite des Spiegels 14 geklebte Platte 30 auf, welche über einen Haltering 32 nach der in der deutschen Patentschrift 29 07 433 beschriebenen Art mit einem Becher 34 lösbar verbunden ist. Dazu weisen sowohl die Platte 30 wie auch ein umlaufender Kranz 35 des Bechers 34 Profile auf, in welche am Haltering 32 ausgebildete Nasen und Konturen gemäß der erwähnten deutschen Patentschrift 29 07 433 eingreifen. Der Becher 34 besitzt eine umlaufende Schürze 36, wobei der freie Rand des Bordes 21 in allen Stellungen des mit dem Spiegel 14 verstellbaren Bechers 34 gegen di Außenwand der Schürze 36 zur Vibrationsdämmung wie in der Gebrauchsmusterschrift 78 06 907 beschrieben anliegt, wozu die Schürze 36 in das Innere des Bechers 34 wie in Fig. 2 dargestellt eintaucht.

Vom Boden des Bechers 34 stehen zwei gegenüberliegende Lagernasen 38, 39 vor, die mit fluchtenden Bohrungen versehen sind. Die Fluchtlinie der Bohrungen der Lagernasen 38, 39 steht senkrecht auf der Fluchtlinie derjenigen Bohrungen, die, wie erwähnt, an den freien Enden der Böcke 26, 28 eingebracht sind. Die Fluchtlinie der Bohrungen in den Lagernasen 38, 39 erstreckt sich parallel zur Längsachse A B des Spiegels 14, die im wesentlichen horizontal liegt, wenn der Spiegel 1 an einem nicht dargestellten Fahrzeug montiert ist. Der Arm 38 mit Spiegel 14 kann dann um diese Achse schwenken.

Ein plattenförmiges, im wesentlichen rechtwinkliges Zahnsegment 40 ist an der dem Spiegel 14 benachbarten Kante mit zwei gegenüberliegenden, parallel zur Fläche des Spiegels 14 sich erstreckenden Achsstummeln 42, 44 in den Bohrungen der Böcke 26, 28 um deren Fluchtachse schwenkbar gelagert. In der Nähe der dem Spiegel 14 benachbarten Kante ist das Zahnsegment 40 von einer Welle 46 durchsetzt und mit der Welle 46 drehfest verbunden. Die Welle 46 ist an ihren gegenüberliegenden Enden in den Bohrungen der Lagernasen 38, 39 um deren Fluchtlinie drehbar gelagert. Damit bilden die Böcke 26, 28, Lagernasen 38, 39 mit dem mit der Welle 46 versehenen Zahnsegment 40 ein Kreuzgelenk, vermöge dessen der Spiegel 14 um die beiden zueinander senkrecht stehenden Fluchtlinien der Bohrungen in den Böcken 26, 28 und der Bohrungen in den Lagernasen 38, 39 allseits beliebig relativ zur Trägerplatte 22 und damit dem Gehäuse verstellbar ist. Die Verstellung des Spiegels 14 kann beispielsweise durch Drücken von außen auf das Spiegelglas an einer außermittigen Stelle erreicht werden. Mögliche Stellungen des Spiegels 14 relative zum Gehäuse 10 sind in den Fig. 2 und 3 durch strichpunktierte Andeutung der Spiegelenden kenntlich gemacht. Das Zahnsegment 40 ist damit nur um die zur Längsachse A B des Spiegels 14 senkechte Hochachse E F verschwenkbar.

Um den Spiegel 14 vom Fahrzeuginneren aus zu verstellen ist der Außenspiegel 1 wie folgt ausgebildet.

Zunächst ist die dem Spiegel 14 gegenüberliegende Kante des Zahnsegments 40 kreisbogenförmig ausgeführt und mit einer (in Fig. 3 nicht im einzelnen dargestellten) Verzahnung versehen. Sodann erstreckt sich vom Boden des Bechers 34 ein in der Querschnittsdarstellung der Fig. 2 U-förmiger, zweischenkeliger Arm 48 weg durch den Durchbruch 24, wobei die beiden Schenkel 47, 49 des Arms 48 zwischen sich das Zahnsegmet 40 so umfassen, daß das Zahnsegment 40 um die Fluchtlinie der Bohrungen der Lagernasen 38, 39 frei verschwenkbar ist. An dem sich über die bogenförmige Kante des Zahnsegments 40 hinaus erstreckende Abschnitt der Schenkel 47, 49 weisen diese zwei gegenüberliegende Lagerbohrungen 50, 52 auf, in welchen das spiegelseitige Ende 74 der biegsamen Welle 70 drehbar gehalten ist. Aus das Ende 74 ist zwischen den Schenkeln 47, 49 ein Ritzel 76 drehfest befestigt, welches mit der Verzahnung des Zahnsegments 40 kämmt (Fig. 2). Durch Drehung der biegsamen Welle 70 läuft daher das Ritzel 76 auf der· Verzahnung des Zahnsegments 40 gemäß dem in Fig. 3 eingetragen Doppelpfeil 78 ab. Anderseits bewirkt eine Längsverschiebung der Welle 70 ein Verschwenken des Armes 48 entsprechend dem in Fig. 2 eingetragenen Doppelpfeil 54. Das gehäuseseitige Ende 69 des Mantels 68 ist zwischen der Trägerplatte 22 und dem Lageransatz 11 des Gehäuses in einem sich aus dem Boden des Gehäuses 10 erhebenden Pfosten 21 so festgelegt, daß das aus dem Mantel 68 vorstehende End 74 den Bewegungen des Ritzels 76 folgen kann. Die biegsame Welle 70, die in dem Mantel 68 verschiebbar und drehbar geführt ist, erstreckt sich durch eine gehäuseseitige, dem Lagerabschnitt 64 benachbarte Öffnung 56 des Gehäuses und durch den Lagerabschnitt 64 hindurch (Fig. 4).

Der Gehäuseansatz 11 weist eine innere Buchse 58 auf, die einer Lagerbohrung 80 des Lagerabschnittes 64 bei auf dem Spiegelfuß 60 befestigtem Gehäuse 10 axial fluchtend gegenüberliegt. Die innere Buchse 58 ist mit Abstand von einem Mantel 57 umgeben, dessen stumpfe bzw. nach radial außen abgesetzte untere Kante 59 auf einer Ringschulter 82 des Lagerabschnitts 64 aufsitzt.

In der Buchse 58 ist der Kopf 83 eines Lagerbolzens 84 drehfest im Paßsitz eingefügt, wobei der weitere Teil des Lagerbolzens 84 sich durch die Lagerbohrung 80 hindurch in einen starkwandigen zylindrischen Käfig 86 des Lagerabschnitts 64 erstreckt und am gegenüberliegenden Ende mit einem Ringflansch 88 versehen ist. Der Ringflansch 88 wird von einer den unteren Teil des Lagerbolzens 84 umgebenden Druckfeder 90, welche am gegenüberliegenden Ende auf einer unteren Schulter des Käfig 86 aufliegt, in Richtung der Achse 12 des Lagerbolzens 84 beaufschlagt, so daß das Gehäuse zwar nach vorne oder hinten um die Achse 12 klappbar, jedoch im übrigen fest auf dem Lagerabschnitt 64 gehalten ist.

Der Käfig 86 besitzt radial einwärts weisende Verstärkungsrippen 92 sowie in seiner Seitenwand 94 eine erste, zum Fahrzeug weisende Öffnung 96 sowie eine zweite, der Öffnung 96 radial gegenüberliegende Öffnung 98, die als sich in Umfangsrichtung bezüglich des Käfigs 86 erstreckender Schlitz ausgebildet ist. Auf diese Weise kann, wie Fig. 4 zeigt, die biegsame Welle 70 mit Mantel 68 vom Inneren des Gehäuses 10 durch die Öffnung 56, den Schlitz 98, an einem mittleren, verjüngten Abschnitt 83 des Lagerbolzens 84 vorbei durch die erste Öffnung 96 heraus durch den Fuß 60 in das Innere des Fahrzeugs, an welchem der Fuß 60 montiert ist, geführt werden. Da die biegsame Welle 70 auf diese Weise nahe an der Schwenkachse 12 vorbeigeführt ist, wird der Spiegel 14 beim Abklappen des Gehäuses 10 nach vorne oder hinten praktisch nicht verstellt.

Der in den Fig. 5 bis 7 dargestellte Stellkasten 100 wird in nicht dargestellter Weise nahe der Montagestelle des Fußes 60 im Inneren des Fahrzeuges so befestigt, daß die Stirnwand 102 des Stellkastens 100 zur bequemen Bedienung eines aus der Stirnwand 102 vorstehenden Handhebels 104 freiliegt. Der Stellkasten 100 besitzt eine Rückwand 106, in deren nach innen offener kugeligen Pfanne 108 die Kugel 110 eines einseitigen Hebels 112 allseits drehbar aufgenommen ist. Das innere End 114 des Handhebels 104 ist in einer Bohrung 116 des Hebels 112 befestigt, welche unterhalb der Kugel 110 im Hebel 112 vorgesehen ist. Das der Kugel 110 gegenüberliegende Ende 118 des Hebels 112 greift in eine Ausnehmung 120 einer Zahnstange 122, welche in einer in der Bodenplatte 124 des Stellkastens 100 ausgebildeten Längsnut in einer Richtung längsverschieblich geführt ist, welche bei der in Fig. 6 gezeigten Draufsicht auf den Stellkasten 100 parallel zur Mittelstellung 126 des Handhebels 104 weist. Auf diese Weise kann durch Betätigen des Handhebels 104 von der in Fig. 5 dargestellten obersten Stellung 128 bis zur untersten Stellung 130 die Zahnstange 122 von ihrer vordersten in ihre hinterste Stellung verschoben werden, welch letztere in Fig. 5 besonders angedeutet ist. Die Zahnstange 122 ist auf ihrer Oberseite mit einer Verzahnung versehen, die mit einem Ritzel 132 kämmt, welches auf dem handgriffseitigen Ende 72 der Biegsamen Welle 70 dreh- und verschiebefest befestigt ist. Dadurch wird die in Fig. 5 gezeigte Bewegung des Handhebels 104 in eine Drehbewegung der biegsamen Welle 70 übertragen. Da die Zahnstange 122 das Ritzel 132 unterfaßt, überträgt sich eine Auf/Abbewegung des Handhebels 104 in eine entsprechende Auf/Abschwenkbewegung des Spiegels 14 um seine Längsachse A B.

Das Ritzel 132 besitzt zwei axial beabstandete Umfangsnuten, wobei in jede der Umfangsnuten ein Greifer 134, 136 einer Platte 140 so eingreift, daß das Ritzel in den Greifern 134, 136 drehbar bleibt, bei einer Verschiebung der Platte 140 in Richtung der Ritzelachse das Ritzel von den Greifern 134, 136 jedoch in dieser translatorischen Bewegung mitgenommen wird. Die Platte 140 ist in der Stirnwand 102 in zwei gegenüberliegenden, unteren Nuten 142, 144 sowie in einer oberen Nut 146 in axialer Richtung bezüglich des Ritzels 132 geführt und weist in einem mittleren Abschnitt einen quer zur Verschieberichtung ausgebildeten Längsschlitz 148 auf. Der in der Bohrung 116 befestigte Stiel 150 des Handhebels 104 erstreckt sich durch den Längsschlitz 148. Somit kann durch seitliches Verschwenken des Handhebels 104 gemäß Fig. 6 das langgestreckte Ritzel 132 in der Verzahnung der Zahnstange 122 entsprechend quer verschoben werden, so daß diese Längsverschiebung auf die biegsame Welle 70 übertragen wird, ohne gleichzeitige Drehung der Welle 70, wenn der Handhebel 104 nur in Richtung des Längsschlitzes 148 bewegt wird, wobei Links/Rechtsbewegungen des Handhebels 104 in Längs/Rechtsschwenkbewegungen des Spiegels um seine Hochachse E F übertragen werden.

Der beschriebene Stellkasten 100 hat den Vorteil, daß er keinerlei verschraubte oder vernietete Teile enthält, sondern aus einfachen, steckbaren Kunststoffteilen zusammengesetzt werden kann. Dennoch sind auch andere Verstellmechanismen denkbar, die die Bewegung des Handhebels 104 in den beiden zueinander senkrechten Richtungen gemäß Fig. 5 and 6 in eine rotatorische und/oder translatorische Bewegung der biegsamen Welle 70 übersetzen. Immerhin hat der beschriebene Stellkasten darüber hinaus noch den Vorteil der besonderen Leichtgängigkeit, die auch nach jahrelangem Gebrauch des Verstellmechanismus unverändert erhalten bleibt.

**Patentansprüche**

1. Fahrzeug-Außenspiegel (1) mit einem an einem Fuß (60) schwenkbar befestigten Gehäuse (10), in welchem ein einen Spiegel (14) tragender Träger (16) über ein mit dem Träger (16) und mit dem Boden des Gehäuses (10) verbundenes, eine Wippe aufweisendes Kreuzgelenk befestigt ist, sowie mit einem in zwei zueinander senkrechten Richtungen verstellbaren Handgriff (104), an welchen ein längsverschiebliches, sich durch den Fuß (60) erstreckendes und am Träger (16) eingehängtes Zugorgan gekoppelt ist, dadurch gekennzeichnet, daß das Zugorgan eine biegsame Welle (70) ist, deren trägerseitiges Ende (74) an einem quer zum Spiegel (14) vom Träger (16) abstehenden Arm (48) eingehängt ist und ein mit der Welle (70) drehbares Ritzel (76) trägt, das mit einem an der Wippe ausgebildeten Zahnsegment (40) kämmt, und daß das handgriffseitige End (72) der Welle (70) mit einem weiteren Ritzel (132) drehfest gekoppelt ist, welches mit einer längsverschiebbaren, mit dem Handgriff (104) gekoppelten Zahnstange (122) kämmt.

2. Spiegel nach Anspruch 1, dadurch gekennzeichnet, daß die Welle (70) von einem festen, biegsamen und am Gehäuse festgelegten Mantel (68) umgeben ist, der sich durch den Fuß (60) erstreckt.

3. Spiegel nach Anspruch 1 oder 2, dadurch gekennzeichnet, daß das Gehäuse (10) am Fuß (60) um einen Lagerbolzen (84) schwenkbar befestigt ist, an dem die Welle (70) durch Öffnungen (56; 96, 98) im Fuß (60) und Gehäuse (10) quer vorbeigeführt ist.

4. Spiegel nach einem der vorstehenden Ansprüche, dadurch gekennzeichnet, daß der Lagerabschnitt (64) des Fußes (60) einen zylindrischen Käfig (86) aufweist, durch den sich der Lagerbolzen (84) axial erstreckt, und daß in der Käfigseitenwand (94) zwei gegenüberliegende Öffnungen (96, 98) für die Welle (70) vorgesehen sind.

5. Spiegel nach Anspruch 4, dadurch gekennzeichnet, daß die gehäuseseitige Öffnung (98) des Käfigs (86) zu einem Umfangsschlitz erweitert ist.

6. Spiegel nach einem der vorstehenden Ansprüche, dadurch gekennzeichnet, daß der Handgriff (104) an einem mit der Zahnstange (122) gekoppelten Schwenkhebel (112) befestigt ist.

7. Spiegel nach Anspruch 6, dadurch gekennzeichnet, daß der Handgriff (104) sich durch eine quer zur Zahnstange (122) verschiebbare und mit dem weiteren Ritzel (132) gekoppelten Platte (140) erstreckt.

8. Spiegel nach einem der vorstehenden Ansprüche, dadurch gekennzeichnet, daß das Zahnsegment (40) in mit dem Gehäuse (10) verbundenen Böcken (26, 28) gelagert und von einer in Nasen (38, 39) des Trägers (16) gelagerten Welle (46) quer durchsetzt ist.

9. Spiegel nach Anspruch 8, dadurch gekennzeichnet, daß der Arm (48) das Zahnsegment (40) beidseitig zwischen den Böcken (26, 28) umfaßt, wobei das Ritzel (76) im Arm (40) unterhalb des Zahnsegments (40) unverschiebbar gelagert ist.

10. Spiegel nach einem der vorstehenden Ansprüche, dadurch gekennzeichnet, daß die Zahnstange (122) das weitere Ritzel (132) unterfaßt und der Arm (48) um die Längsachse (A B) des Spiegels (14), die bei an einem Fahrzeug anmontiertem Spiegel (1) im wesentlichen horizontal verläuft, schwenkbar gelagert ist.

**Claims**

1. An exterior vehicle mirror (1) comprising a housing (10) which is pivotally secured to a base (60) and in which a carrier (16) carrying a mirror (14) is fixed by way of a universal joint which is connected to the carrier (16) and to the bottom of the housing (10) and which has a rocking member, and a handle (104) which is displaceable in two mutually perpendicular directions and to which there is coupled a longitudinally displaceable pulling member which extends through the base (60) and which is engaged to the carrier (16), characterised in that the pulling member is a flexible shaft (70), the end thereof (74) which is towards the carrier being engaged to an arm (48) projecting from the carrier (16) transversely with respect to the mirror (14) and carrying a pinion (76) which is rotatable with the shaft (70) and which meshes with a toothed segment (40) provided on the rocking member, and that the end (72) of the shaft (70) which is towards the handle is non-rotatably coupled to a further pinion (132) which meshes with a longitudinally displaceable rack (122) coupled to the handle (104).

2. A mirror according to claim 1 characterised in that the shaft (70) is enclosed by a fixed, flexible casing (68) which is secured to the housing and which extends through the base (60).

3. A mirror according to claim 1 or claim 2 characterised in that the housing (10) is secured to the base (60) pivotably about a mounting pin (84), the shaft (70) being taken transversely past the mounting pin through openings (56; 96, 98) in the base (60) and the housing (10).

4. A mirror according to one of the preceding claims characterised in that the mounting portion (64) of the base (60) has a cylindrical cage (86) through which the mounting pin (84) axially extends and that two oppositely disposed openings (96, 98) are provided for the shaft (70) in the cage side wall (94).

5. A mirror according to claim 4 characterised in that the opening (98) at the housing side of the cage (86) is enlarged to provide a peripheral slot.

6. A mirror according to one of the preceding claims characterised in that the handle (104) is secured to a pivotal lever (112) coupled to the rack (122).

7. A mirror according to claim 6 characterised in that the handle (104) extends through a plate (140) which is displaceable transversely with respect to the rack (122) and which is coupled to the further pinion (132).

8. A mirror according to one of the preceding claims characterised in that the toothed segment (40) is mounted in supports (26, 28) which are connected to the housing (10), and a shaft (46) mounted in projections (38, 39) on the carrier (16) passes transversely through the toothed segment.

9. A mirror according to claim 8 characterised in that the arm (48) embraces the toothed segment (40) on both sides between the supports (26, 28), wherein the pinion (76) is mounted non-displaceably in the arm (40) beneath the toothed segment (40).

10. A mirror according to one of the preceding claims characterised in that the rack (122) engages under the further pinion (132) and the arm (48) is mounted pivotally about the longitudinal axis (AB) of the mirror (14) which, when the mirror (1) is mounted on a vehicle, extends substantially horizontally.

**Revendications**

1. Rétroviseur extérieur pour automobile (1), avec un boîtier (10) qui est fixé de manière pivotante sur un pied (60) dans lequel un support (16) supportant un miroir (14) est fixé par l'intermédiaire d'une articulation à croisillon qui comporte une pièce basculante et qui est reliée au support (16) et au fond du boîtier (10), ainsi qu'avec une poignée manuelle (104) qui est réglable dans deux directions perpendiculaires l'une à l'autre et à laquelle est couplé un organe de traction qui peut coulisser longitudinalement, qui s'étend à travers le pied (60) et qui est accroché au support (16), caractérisé en ce que l'organe de traction est un arbre flexible (70) dont l'extrémité côté support (74) est accrochée à un bras (48) faisant saillie sur le support (16) transversalement au miroir (14) et supporte un pignon (76) qui peut tourner avec l'arbre (70) et qui s'engrène avec un segment denté (40) réalisé sur la pièce basculante, et en ce que l'extrémité, côté poignée manuelle, (72) de l'arbre (70) est liée en rotation avec un autre pignon (132) qui s'engrène, de manière coulissante transversalement, avec une crémaillère coulissante (122) couplée avec la poignée manuelle (104).

2. Rétroviseur conforme à la revendication 1, caractérisé en ce que l'arbre (70) est entouré d'une gaine (68) solide, souple et appliquée contre le boîtier, qui s'étend à travers le pied (60).

3. Rétroviseur conforme à la revendication 1 ou 2, caractérisé en ce que le boîtier (10) au niveau du pied (60) est fixé de manière rotative autour d'un goujon de support (84) devant lequel l'arbre (70) passe transversalement à travers des ouvertures (56; 96, 98) dans le pied (60) et le boîtier (10).

4. Rétroviseur conforme à l'une des revendications précédentes, caractérisé en ce que la portion d'appui (64) du pied (60) comporte une cage cylindrique (86) à travers laquelle le goujon de support (84) s'étend axialement, et en ce que, dans la paroi latérale de cage (94) sont prévues deux ouvertures opposées (96, 98) pour l'arbre (70).

5. Rétroviseur conforme à la revendication 4, caractérisé en ce que l'ouverture côté boîtier (98) de la cage (86) est élargie en forme de fente circonférentielle.

6. Rétroviseur conforme à l'une des revendications précédentes, caractérisé en ce que la poignée manuelle (104) est fixée à un levier pivotant (112) couplé à la crémaillère (122).

7. Rétroviseur conforme à la revendication 6, caractérisé en ce que la poignée manuelle (104) s'étend à travers une plaque (140) qui peut coulisser transversalement à la crémaillère (122) et qui est couplée à l'autre pignon (132).

8. Rétroviseur conforme à l'une des revendications précédentes, caractérisé en ce que le segment denté (40) est logé dans des pattes (26, 28) reliées au boîtier (10) et est traversé transversalement par un arbre (46) logé dans des taquets (38, 39) du support (16).

9. Rétroviseur conforme à la revendication 8, caractérisé en ce que le bras (48) peut entourer le segment denté (40) des deux côtés entre les pattes (26, 28), le pignon (76) étant logé dans le bras (48) sous le segment denté (40).

10. Rétroviseur conforme à l'une des revendications précédentes, caractérisé en ce que la crémaillère (122) supporte l'autre pignon (132) et le bras est monté de manière pivotante autour de l'axe longitudinal (A B) du miroir (14) qui s'étend sensiblement horizontalement dans le cas d'un rétroviseur (1) monté sur un véhicule.

Fig. 1

Schnitt A-B

Fig. 2

EP 0 216 942 B1

Schnitt E-F

Fig. 3

Schnitt C-D

Fig. 4

Fig. 5

Fig.7

100.

150
148
140

72

102    122

100

Fig.6

72

114

136

134

150

104

126